# FASCICULE DE BREVET EUROPEEN

(11) **EP 2 856 398 B1**
(45) Date de publication et mention de la délivrance du brevet: **08.01.2020**
(21) Numéro de dépôt: 13728495.6
(22) Date de dépôt: 27.05.2013
(51) Int. Cl.: G06Q 10/08, G08B 13/24, G09F 3/03, G09F 7/06, G09F 3/12, G06K 19/08, G06K 19/077

(54) **DISPOSITIF DE PROTECTION CONTRE LE VOL D'UN ARTICLE COMMERCIAL**
VORRICHTUNG ZUM SCHUTZ EINER WARE GEGEN DIEBSTAHL
DEVICE FOR PROTECTING A COMMERCIAL ARTICLE AGAINST THEFT

(30) Priorité: 25.05.2012 FR 1254885; 23.08.2012 FR 1257972
(43) Date de publication de la demande: 08.04.2015
(73) Titulaire: Exaqtworld, 94340 Joinville-le-Pont (FR)
(72) Inventeur: FAVIER, Alain, F-94130 Nogent sur Marne (FR)
(74) Mandataire: Petit, Maxime
(86) Numéro de dépôt international: PCT/FR2013/051161
(87) Numéro de publication internationale: WO 2013/175149

(56) Documents cités:
- EP-A1- 1 610 263
- EP-A1- 1 788 516
- EP-A2- 2 325 777
- EP-A2- 2 325 777
- WO-A1-2008/069643
- WO-A2-2006/099123
- WO-A2-2008/018037
- BE-A7- 1 004 849
- FR-A1- 2 947 086
- FR-A1- 2 947 086
- JP-A- 2006 085 295
- US-A1- 2004 233 042
- US-A1- 2004 263 319
- US-A1- 2005 061 874
- US-A1- 2006 144 940
- US-A1- 2007 156 281
- US-A1- 2007 156 281
- US-A1- 2010 164 691
- US-B1- 7 501 954

## Description

L'invention est relative à un dispositif, un système et un procédé d'identification/protection contre le vol d'un article commercial.

Le secteur de la vente d'articles commerciaux en magasin souffre de plusieurs types de manques à gagner regroupés sous le terme de « Démarque Inconnue » ou DI. La DI se divise en trois parties :
- le vol externe (clients) qui représente de 30 à 40% de la DI et se caractérise par des clients mal intentionnés quittant le magasin avec des articles non payés ou qui changent les prix ou pourcentages de remise avant le passage en caisse ;
- le vol interne (employés) qui représente de 30 à 50% de la DI et se caractérise par des employés mal intentionnés qui, soit enlèvent les badges antivols (tels que les « tags » résonnants) des articles car ils ont accès aux systèmes de déverrouillage ou de désactivation, soit n'encaissent pas tout ou partie du montant des articles remis à une autre personne de leur connaissance (encaissement frauduleux) ;
- les erreurs administratives, les erreurs d'encaissement et les écarts d'inventaire qui représentent le reste de la DI.

A ce jour pour lutter contre la DI les magasins utilisent la vidéo surveillance, des vigiles et/ou les badges antivol qui sont attachés aux articles mis en vente et déclenchent une alarme lors du passage entre les portiques antivol placés aux entrées et sorties des magasins s'ils n'ont pas été préalablement retirés en caisse.

Toutefois, les badges antivol ne sont pas efficaces en cas de substitution par une personne mal intentionnée d'une étiquette de prix d'un article avec celle d'un autre article ou lorsqu'un employé de caisse scanne le code barre de l'étiquette (code EAN, EPC...) d'un article à bas prix et vend, à une personne de son choix, un ou plusieurs articles à prix plus élevé.

La vidéo surveillance n'est pas assez efficace non plus pour combattre le vol interne en raison d'un personnel de surveillance des écrans vidéo relativement réduit, d'un grand nombre de personnes à surveiller dans les grands magasins et d'angles morts que les caméras ne peuvent atteindre.

Les vigiles, quant à eux, ne sont pas fiables et ne peuvent surveiller qu'un nombre limité de personnes.

Par ailleurs, un code ou une référence d'article commercial (EAN, EPC...) est généralement présent (imprimé ou collé) sur chaque étiquette (ex :en carton ou en plastique) attachée à l'article en tant qu'objet physique et qui porte par exemple le prix de l'article. L'inventeur a constaté que deux objets physiques qui correspondent respectivement à deux articles commerciaux possédant le même code ou la même référence d'article commercial (EAN, EPC...) dans le point de vente ne sont pas différenciables l'un de l'autre dans le système informatique du point de vente, ce qui n'est pas sans poser de problème lors des inventaires de stock d'articles et également lors du passage en caisse de plusieurs articles commerciaux identiques. Les documents EP 2 325 777 A2, US 2007 156 281 A1, US 2004 263 319 A1 , JP2006 085 295 A et WO 2008 018 037 A2 représentent l'art antérieur divulguant l'état de la technique relatif à la présente invention.

La présente invention vise à remédier à au moins un des inconvénients précités en proposant un procédé de sécurisation d'un article commercial selon la revendication 1. Un dispositif exemplaire de protection contre le vol d'un article commercial qui est un objet physique emballé ou non comporte :
- au moins un organe actif ou passif qui est apte à émettre vers l'extérieur du dispositif ou à recevoir de l'extérieur des ondes électromagnétiques,
- des moyens de fixation et de verrouillage du dispositif à l'objet physique ou à son emballage dans une position verrouillée telle qu'un utilisateur ne peut séparer le dispositif de l'objet physique sans un outil (spécifique) externe, lesdits moyens de verrouillage comprenant un mécanisme de verrouillage,
- au moins un code à lecture optique identifiant de manière unique l'objet physique auquel le dispositif est destiné à être fixé et qui est distinct d'un code d'article commercial (code barre à une dimension de type EAN, EPC...) affecté à l'objet physique, en tant qu'article commercial.

Ledit au moins un code à lecture optique permet ainsi de différencier l'un de l'autre deux objets physiques qui correspondent respectivement à deux articles commerciaux possédant le même code ou la même référence d'article commercial (EAN, EPC...), ce que ne permet pas de faire un code barre EAN.

Ce code d'article commercial est généralement présent (imprimé ou collé) sur des étiquettes (ex : en carton) attachées aux articles en tant qu'objets physiques et qui portent par exemple le prix des articles. La présence du ou des codes à lecture optique sur le dispositif verrouillé à l'article en tant qu'objet physique (et donc qui ne peut être remplacé ou falsifié), permet (par exemple à un employé de caisse) de lire ce code qui est lié/associé au code/référence d'article commercial dans le système informatique du magasin et, donc, qui est lié/associé au prix de cet article. Les inventaires de stock d'articles sont ainsi grandement facilités par la présence d'un tel code à lecture optique sur un dispositif fixé à l'objet physique et distinct de l'étiquette portant le prix et le code barre EAN.

On notera par ailleurs que, lors du passage en caisse de plusieurs articles de la même famille (par exemple des chemises) qui ont chacune un code/référence d'article commercial différent (par exemple parce qu'il s'agit de chemises de couleurs différentes) mais un prix identique, il n'est pas rare que le personnel de caisse se contente de lire l'étiquette d'un article et multiplie sur sa caisse le prix affiché de l'article « lu » par le nombre d'articles. Une telle situation crée par la suite des écarts d'inventaire. La lecture systématique du code optique du dispositif attaché à chaque article permet de réduire fortement les écarts d'inventaire.

Même en cas de changement de l'étiquette de prix fixée à l'article avec celle d'un autre article (avant le passage en caisse), la lecture du code optique permet d'identifier de façon univoque, simple (et avec un investissement minimal), certaine et sécurisée l'objet physique auquel le dispositif est fixé (et également d'identifier le dispositif), que l'employé lise ou non le code barre (EAN, EPC...) se trouvant sur l'étiquette avec le prix. Ainsi, l'invention garantit au commerçant et au consommateur que l'objet physique auquel est fixé le dispositif est vendu/acheté au prix correspondant à l'article commercial et non à un autre article, notamment par suite d'une action frauduleuse. La lecture du code à lecture optique constitue une deuxième lecture/identification possible de l'article en tant qu'objet physique (en plus de celle du code barre ou code/référence d'article commercial porté par l'étiquette attachée à l'article).

L'adjonction/intégration d'au moins un code à lecture optique au dispositif précité permet ainsi de sécuriser l'article vis-à-vis d'éventuelles fraudes commises dans le magasin où l'article est proposé à la vente.

Le ou les organes actifs ou passifs aptes à émettre vers l'extérieur du dispositif ou à recevoir de l'extérieur des ondes électromagnétiques sont, par exemple logés dans le dispositif et inaccessibles de l'extérieur. Ils sont susceptibles de coopérer avec un système/élément complémentaire de protection/détection contre le vol (ex : portique antivol situé aux points d'accès d'un magasin) et de déclencher une alarme lorsque le dispositif, toujours verrouillé à l'objet physique, passe à proximité du système/élément complémentaire ; ce ou ces organes assurent ainsi en partie la fonction antivol du dispositif en coopération avec le système/élément complémentaire précité ; un tel organe est par exemple un circuit électrique résonant qui entre en résonance, de façon connue, sous l'action d'ondes excitatrices émises à la fréquence de résonance du circuit.

On notera que le dispositif est fixé à l'article à protéger ou à son emballage le contenant et est verrouillé à l'article ou son emballage grâce au mécanisme de verrouillage interne au dispositif et non accessible de l'extérieur. Ce mécanisme nécessite un outil pour son déverrouillage (désactivation) tel qu'un aimant pour certains types de dispositif ou un outil à mécanisme mécanique lorsque le mécanisme de verrouillage est par exemple du type à crochet.

Selon d'autres caractéristiques possibles, prises isolément ou en combinaison les unes avec les autres :
- ledit au moins un code à lecture optique n'est pas accessible depuis l'extérieur du dispositif; le code est ainsi lisible de l'extérieur du dispositif mais non accessible à un utilisateur ou à un employé du magasin et il est donc protégé de la fraude, du vandalisme et d'autres agressions extérieures non volontaires (mécaniques, chimiques...); par exemple, ledit au moins un code à lecture optique est protégé de l'extérieur du dispositif par une interface ou élément d'interface de protection transparente qui autorise la lecture dudit code au travers; ledit au moins code à lecture optique est par exemple imprimé ou collé sur un support faisant partie ou non du dispositif et qui est par exemple encapsulé dans le dispositif ou protégé par un film, un vernis ou un autocollant transparent ;
- ledit au moins un code à lecture optique est apte à être lu par un appareil de communication électronique par exemple mobile (par exemple un appareil de communication de grande consommation) tel qu'un smartphone; ainsi, les clients du magasin équipés d'un tel appareil peuvent lire ce code (sans le modifier) et avoir accès, de façon certaine, à des informations sur l'article mis en vente qui est équipé du dispositif ; le dispositif portant ledit au moins un code à lecture optique fait ainsi office d'interface ou de relais de communication entre l'article (produit) et l'utilisateur ; les employés du magasin peuvent également lire le code pour s'assurer de son lien avec le code EAN présent sur l'étiquette attachée à l'article ou pour des besoins d'inventaire ou encore pour récupérer des informations commerciales sur l'article/produit ;
- ledit au moins un code à lecture optique est représentatif d'une adresse URL d'un site ou d'une page web en relation avec l'article commercial auquel le dispositif est destiné à être fixé et verrouillé ; ceci permet d'offrir rapidement et directement aux clients des informations supplémentaires sur l'article et des renseignements que seul un vendeur serait à même de fournir ; ceci est particulièrement avantageux en cas d'indisponibilité momentanée d'un vendeur, par exemple à cause d'une grande affluence ;par ailleurs, l'utilisation d'un code à lecture optique intégré au dispositif constitue, pour un utilisateur, un point d'entrée/d'accès sécurisé (via le réseau Internet) à des informations enregistrées sous forme électronique de manière sécurisée (dans un système informatique distant tel qu'un serveur) et non présentes sur l'article (donc non directement accessibles et falsifiables par une personne présente en magasin) ; ce point d'entrée/d'accès sécurisé permet à l'utilisateur d'accéder par exemple à un processus de transaction sécurisé (paiement en ligne) qui ne nécessite pas de passage en caisse pour effectuer le paiement de l'article (l'utilisateur est ainsi sûr qu'il achète le bon article au bon prix) ;
- ledit au moins un code à lecture optique incorpore une chaîne de caractères alphanumériques qui est décodable par une application logicielle exécutable sur un appareil de communication électronique tel qu'un Smartphone, de façon à permettre ainsi d'identifier de manière unique et sécurisée l'article commercial (par exemple par l'intermédiaire d'informations sur cet article) ; ledit au moins un code à lecture optique n'incorpore pas de script représentant directement une adresse URL dédiée à l'article tel que « http// ...produitl/marque fabricant/... ; ainsi, le code peut être plus simple de conception, c'est-à-dire qu'il comporte moins de données à décoder et il est donc plus facilement décodable (de ce fait, il peut également être de taille réduite car porteur de moins d'informations) ; en outre, le code est facilement réutilisable un nombre illimité de fois pour identifier d'autres articles commerciaux, rendant ainsi le dispositif selon l'invention « recyclable » ;

- le décodage permet d'accéder à une zone mémoire sécurisée d'un système informatique dans laquelle est enregistrée une table d'association qui établit une association entre ledit au moins un code à lecture optique et l'article commercial/ code d'article commercial (EAN..) et notamment le point de vente de l'article commercial ; cette table d'association établit un lien avec l'article commercial auquel le dispositif est fixé et notamment avec des informations relatives à cet article, à savoir son prix, le lieu où il se trouve, son descriptif, son code d'article commercial (EAN, EPC...), une ou plusieurs adresses URL dédiées à l'article... ; en modifiant la table d'association il est facile de désassocier ledit au moins un code à lecture optique de l'article commercial et de le réaffecter à un autre article commercial tandis que le dispositif porteur dudit au moins un code à lecture optique est fixé au nouvel objet physique correspondant ;
- le décodage permet d'établir une connexion sécurisée vers une adresse URL d'un site ou d'une page web dédié à l'article commercial par l'intermédiaire d'une table d'association établissant une association entre ledit au moins un code à lecture optique, ladite adresse URL et éventuellement un code d'article commercial (EAN..) ;
- ledit au moins un code à lecture optique est un code à deux dimensions tel qu'un code QR ou un code de type Datamatrix ;
- ledit au moins un code à lecture optique présente une densité de codage lui permettant d'être décodé facilement et rapidement par un appareil de communication, par exemple mobile, équipé d'un lecteur/décodeur de code optique;
- ledit au moins un code à lecture optique présente une taille réduite de 7mmx7mm afin de pouvoir être lu facilement par un appareil de communication, par exemple mobile, équipé d'un lecteur de code optique et porté par une personne se tenant debout à côté de l'objet;
- ledit au moins un code à lecture optique est apte à être réaffecté à l'identification de manière unique et sécurisée d'une pluralité d'autres objets physiques à chacun desquels le dispositif est destiné à être successivement fixé ; le code à lecture optique peut ainsi être aisément associé à d'autres codes d'articles commerciaux (EAN, EPC...) dans le système informatique du magasin et le dispositif portant ledit code à lecture optique est fixé à l'article (objet physique) correspondant ;
- le dispositif est aussi équipé d'un organe RFID ou organe de radio identification (transpondeur ou radio-étiquette comprenant une puce en silicium et une antenne et, éventuellement une batterie) qui possède un identifiant TID unique; cet identifiant est associé au code à lecture optique et fait également office d'identifiant univoque de l'objet physique auquel le dispositif est fixé ; la lecture de l'identifiant TID, par exemple avec un pistolet à lecture RFID, constitue une autre lecture/identification possible du dispositif en vue d'identifier de façon certaine et sécurisée l'objet physique ;on notera que le code à lecture optique peut être créé de façon indépendante de l'identifiant TID pour des raisons de simplification et être ensuite associé à ce dernier dans une mémoire d'un système informatique ;
- le dispositif comprend deux parties, à savoir une tête munie d'une pointe destinée à traverser l'objet physique ou son emballage et un corps pourvu d'un orifice pour l'insertion de la pointe et de moyens de verrouillage de ladite pointe dans le corps, ledit au moins un code à lecture optique étant porté par la tête et/ou le corps ;alternativement le dispositif peut être en une seule pièce comportant deux organes de serrage formant pinces et qui, sous l'action d'un système de commande de serrage mis en œuvre par un employé du magasin lors de l'installation sur l'objet physique, enserrent l'objet ou son emballage de façon verrouillée tel que décrit dans la demande de brevet français n°2 942 835 .

Selon un deuxième exemple de dispositif non compris dans les revendications, un dispositif d'identification d'un article commercial qui est un objet physique emballé ou non comporte :
- des moyens de fixation et de verrouillage du dispositif à l'objet physique ou à son emballage dans une position verrouillée telle qu'un utilisateur ne peut séparer le dispositif de l'objet physique sans un outil externe, les moyens de verrouillage comprenant un mécanisme de verrouillage,
- au moins un organe RFID qui possède un identifiant unique TID et qui est apte à être lu à la fois suivant une première gamme de fréquences radio pour une lecture à courte portée (à la place du ou des codes à lecture optique du dispositif selon le premier aspect ci-dessus) et suivant une deuxième gamme de fréquences radio pour une lecture à longue portée, ou
- au moins un premier organe RFID (premier transpondeur de radio identification à la place du ou des codes à lecture optique du dispositif selon le premier aspect ci-dessus) qui possède un identifiant unique TID1 et qui est apte à être lu suivant une première gamme de fréquences radio pour une lecture à courte portée et au moins un deuxième organe RFID (deuxième transpondeur de radio identification) qui possède un identifiant unique TID2 et qui est apte à être lu suivant une deuxième gamme de fréquences radio pour une lecture à longue portée.

La lecture à courte portée d'un organe RFID est plus rapide que la lecture d'un code optique, ce qui est avantageux dans certaines circonstances.

Le deuxième organe RFID est par exemple utilisé pour la gestion (inventaire...) de l'article en magasin avec le personnel du magasin, tandis que le premier organe RFID est utilisé comme interface de communication pour la communication avec les clients (via un appareil de communication tel que décrit ci-dessus).

On notera que chaque transpondeur (organe RFID/puce électronique avec antenne) peut posséder un identifiant unique TID et identifier l'objet physique auquel le dispositif est destiné à être fixé, l'identifiant TID différent d'un transpondeur à l'autre est distinct d'un code d'article commercial (code barre à une dimension de type EAN, EPC...) affecté à l'objet physique, en tant qu'article commercial.

Le dispositif peut également être un dispositif de protection contre le vol de l'article et, à cet effet, comporter les caractéristiques du dispositif selon le premier aspect. Ainsi, le dispositif est un dispositif de protection contre le vol d'un article commercial et comprend au moins un organe actif ou passif qui est apte à émettre vers l'extérieur du dispositif ou à recevoir de l'extérieur des ondes électromagnétiques.

Selon d'autres caractéristiques prises isolément ou en combinaison l'une avec l'autre :
- le ou les organes RFID ne sont pas accessibles depuis l'extérieur du dispositif ;
- l'identifiant unique TID, TID1 est apte à être lu à courte portée par un appareil de communication électronique tel qu'un smartphone ;
- l'identifiant unique TID, TID1 est représentatif d'une adresse URL d'un site ou d'une page web en relation avec l'article commercial auquel le dispositif est destiné à être fixé et verrouillé ;
- l'identifiant unique TID, TID1 incorpore une chaîne de caractères alphanumériques qui est décodable par une application logicielle exécutable sur un appareil de communication électronique tel qu'un smartphone, de façon à permettre ainsi d'identifier de manière unique et sécurisée l'article commercial ;
- le décodage permet d'accéder à une zone mémoire sécurisée d'un système informatique dans laquelle est enregistrée une table d'association qui établit une association entre l'identifiant unique TID, TID1 et l'article commercial/code d'article commercial (EAN..) et notamment le point de vente de l'article commercial ;
- le décodage permet d'établir une connexion sécurisée vers une adresse URL d'un site ou d'une page web dédié à l'article commercial par l'intermédiaire d'une table d'association établissant une association entre l'identifiant unique TID, TID1, ladite adresse URL et éventuellement le code d'article commercial (EAN..).

On notera que les caractéristiques et avantages mentionnés ci-dessus en relation avec le premier exemple s'appliquent également au dispositif selon le deuxième exemple.

Selon un troisième exemple non compris dans les revendications un système de sécurisation d'un article commercial comprend :
- au moins un dispositif tel que brièvement exposé ci-dessus,
- des moyens d'association dudit au moins un code à lecture optique au code d'article commercial (EAN, EPC...) affecté à l'objet physique, en tant qu'article commercial et auquel le dispositif est destiné à être fixé; cette association est faite sous forme logicielle dans une zone mémoire dans le système informatique du magasin.

Selon d'autres caractéristiques possibles, prises isolément ou en combinaison les unes avec les autres :
- le système comprend un appareil de communication par exemple mobile, tel qu'un Smartphone ou une tablette électronique du type iPad, qui est apte à lire ledit au moins un code à lecture optique ;
- ledit au moins un code à lecture optique est représentatif d'une adresse URL d'un site ou d'une page web dédié à l'article commercial ;
- ledit au moins un dispositif est équipé d'un organe RFID qui possède un identifiant TID unique ; un tel identifiant n'est généralement pas visible de l'extérieur du dispositif contrairement audit au moins un code à lecture optique ;
- le système comporte des moyens d'association de l'identifiant TID audit au moins un code à lecture optique dudit au moins un dispositif et/ou au code d'article commercial (EAN, EPC...) ; ainsi, la lecture/l'identification de l'un ou de l'autre parmi ledit au moins un code à lecture optique et l'identifiant TID permet d'identifier de façon unique et sécurisée l'objet physique auquel le dispositif est fixé ;
- le système comporte des moyens d'association de l'identifiant TID à l'adresse URL du site ou de la page web dédié à l'article commercial et éventuellement au code d'article commercial (EAN, EPC...) ;
- le système comporte des moyens d'enregistrement de chaque association dans une zone mémoire d'un système informatique ;
- le système comporte l'enregistrement de l'association de l'identifiant TID audit au moins un code à lecture optique dudit au moins un dispositif est effectué dans une première zone mémoire ;
- l'enregistrement de l'association de l'identifiant TID à l'adresse URL du site ou de la page web dédié à l'article commercial et audit code d'article commercial (EAN, EPC...) est effectué dans une deuxième zone mémoire ;
- le système comporte des moyens d'enregistrement , dans une zone mémoire d'un système informatique, d'une part, de chaque lecture dudit au moins un code à lecture optique du dispositif par un appareil de communication mobile électronique (50) tel qu'un Smartphone et, d'autre part, de chaque action ultérieure exercée par un utilisateur par l'intermédiaire dudit appareil à partir des informations auxquelles l'utilisateur a pu avoir accès après la lecture dudit au moins un code à lecture optique ;
- le système comprend :
   deux dispositifs tels que brièvement exposés ci-dessus et comportant respectivement un premier et un deuxième code à lecture optique (QR1, QR2) identifiant de manière unique un premier et un deuxième objet physique auxquels les deux dispositifs sont respectivement destinés à être fixés,
   des moyens d'association de chacun des premier et deuxième codes à lecture optique (QR1,QR2) à un même code d'article commercial (EAN, EPC...) affecté aux premier et deuxième objets physiques, permettant ainsi de différencier le premier objet physique du deuxième objet physique .

L'invention a en outre pour objet un procédé de sécurisation d'un article commercial auquel le dispositif tel que brièvement exposé ci-dessus est destiné à être fixé, le procédé comprenant l'association dudit au moins un code à lecture optique du dispositif au code d'article commercial (EAN, EPC...) affecté à l'objet physique, en tant qu'article commercial, et auquel le dispositif est destiné à être fixé. Comme déjà mentionné plus haut, cette association permet d'établir très facilement, dans une zone mémoire d'un système informatique, un lien provisoire entre ledit au moins un code à lecture optique et l'article commercial auquel le dispositif va être fixé.

Selon l'invention
- le procédé comprend la fixation et le verrouillage du dispositif à un objet physique affecté du code d'article commercial (EAN, EPC...) qui est associé audit au moins un code à lecture optique du dispositif ;on assure ainsi la traçabilité de l'article commercial en tant qu'objet physique et l'identification de l'article est sécurisée, de même que l'encaissement de l'article lors du passage en caisse ; les écarts d'inventaire dus aux erreurs d'encaissement et au vol interne et externe sont ainsi évités;
- le dispositif étant conforme à ce qui précède, le procédé comprend l'association entre ledit au moins un code à lecture optique et l'article commercial et notamment l'information sur le point de vente de l'article commercial et éventuellement l'adresse URL du site ou de la page web dédié à l'article commercial. ;
- le dispositif étant conforme à ce qui précède, le procédé comprend l'association de l'identifiant TID audit au moins un code à lecture optique dudit au moins un dispositif et au code d'article commercial (EAN, EPC...) ;
- le dispositif étant conforme à ce qui précède, le procédé comprend l'association de l'identifiant TID à l'adresse URL du site ou de la page web dédié à l'article commercial et éventuellement au code d'article commercial (EAN, EPC...) ;
- par exemple, le procédé comprend l'enregistrement de chaque association dans une zone mémoire d'un système informatique ;
- par exemple, le procédé comprend l'enregistrement, dans une zone mémoire d'un système informatique, d'une part, de chaque lecture dudit au moins un code à lecture optique du dispositif par un appareil de communication mobile électronique tel qu'un Smartphone et, d'autre part, de chaque action ultérieure exercée par un utilisateur par l'intermédiaire dudit appareil à partir des informations auxquelles l'utilisateur a pu avoir accès après la lecture dudit au moins un code à lecture optique ;ainsi, un historique des lectures de différents codes optiques par l'utilisateur est mémorisé, de même qu'un historique des achats effectués via son appareil et/ou des articles conservés en favori ou dans son panier d'achat, des différents points de vente où les codes ont été lus....
- selon l'invention, le procédé comprend la dissociation dudit au moins un code à lecture optique et/ou de l'identifiant TID porté par le dispositif avec le code d'article commercial (EAN, EPC...) affecté à l'objet physique lorsqu'une transaction commerciale a été effectuée sur ledit objet physique et que ledit dispositif est séparé de ce dernier ; ledit au moins un code à lecture optique porté par le dispositif peut alors être réassocié en zone mémoire du système informatique à un nouvel article commercial (nouveau code d'article commercial, nouvelles informations relatives à cet article et nouvelle(s) adresse(s) URL dédiée(s)).

À titre d'exemple, l'on prévoit l'utilisation d'un dispositif tel que brièvement exposé ci-dessus et qui est fixé à un objet physique en tant qu'article commercial, l'utilisation comprenant la lecture dudit au moins un code à lecture optique du dispositif par un appareil de communication électronique mobile tel qu'un Smartphone, une tablette tactile.... Un lien est ainsi établi entre l'article, le magasin où est vendu l'article et l'utilisateur (consommateur) via l'appareil et le code à lecture optique.

Selon d'autres caractéristiques possibles, prises isolément ou en combinaison les unes avec les autres :
- la lecture dudit au moins un code à lecture optique comprend le décodage de la chaîne de caractères alphanumériques par l'application logicielle exécutée sur l'appareil de communication mobile électronique ;
- le décodage comprend l'accès à une zone mémoire sécurisée d'un système informatique dans laquelle est enregistrée une table d'association qui établit une association entre ledit au moins un code à lecture optique et l'article commercial et notamment le lieu où se trouve l'article commercial ;
- l'utilisation comprend l'identification de l'utilisateur de l'appareil de communication mobile souhaitant accéder à la zone mémoire sécurisée et, en cas de nouvel utilisateur, la création d'un compte utilisateur ; l'accès à la zone mémoire sécurisée s'accompagne de la fourniture d'informations de la part de l'utilisateur aux fins d'identification (ex : nom d'utilisateur, mot de passe...) ;
- l'utilisation comprend l'établissement d'une connexion sécurisée à une adresse URL d'un site ou d'une page web dédié à l'article commercial par l'intermédiaire de la table d'association qui établit une association entre ledit au moins un code à lecture optique et ladite adresse URL ; l'établissement de cette connexion est faite de manière automatique et l'utilisateur est ainsi redirigé vers le ou les adresses concernées.

L'utilisation peut également comprendre au moins l'une des actions suivantes déclenchées à partir du site ou de la page web affiché (par exemple à partir d'informations sur l'objet physique accessibles sur le site ou la page web affiché) sur l'appareil de communication mobile:
- obtention du nombre d'objets physiques en stock qui possèdent le même code d'article commercial (EAN, EPC...),
- obtention des caractéristiques de l'objet physique,
- sélection et mémorisation de l'article commercial dans un panier virtuel ou dans une liste d'articles sélectionnés,
- réalisation d'une transaction (de paiement) en vue de l'acquisition de l'objet physique équipé du dispositif ou d'autres objets physiques, par exemple par auto-encaissement (sans avoir recours à un employé du magasin pour réaliser la transaction de paiement),
- réalisation d'une transaction en vue de l'acquisition d'au moins un autre objet physique en relation avec l'objet physique équipé du dispositif d'identification par l'intermédiaire d'une passerelle informatique entre, d'une part, ledit site ou ladite page web affiché sur l'appareil de communication mobile et qui est dédié à l'article commercial et, d'autre part, un autre site ou une autre page web proposant des objets/articles commerciaux identiques et/ou associés ;
- déverrouillage du dispositif de l'objet physique à l'enregistrement du paiement par le client (par exemple afin de pouvoir émettre de façon certaine et sans équivoque un ticket d'achat pour le client, garantissant ainsi de manière certaine la transaction sur l'article, tant pour le client que pour le magasin, l'article sélectionné par le client ayant ainsi été acheté/vendu au prix correspondant) ;
- conservation de l'historique des lectures de codes optiques dans l'appareil aux fins de consultation et/ou d'achat ultérieurs dans le lieu de vente où l'article a été identifié et « lu » ou dans d'autres lieux de vente.

On notera que les caractéristiques et avantages présentés ci-dessus en relation avec le système selon le troisième exemple, le procédé selon l'invention et l'utilisation du dispositif s'appliquent également au dispositif selon le deuxième exemple (association des codes, lecture des codes, décodage...enregistrement des associations, tables d'association.....). Tout ce qui concerne ledit au moins un code optique s'applique donc également au code TID de l'organe RFID unique ou de l'organe RFID lisible à courte portée.

D'autres caractéristiques et avantages apparaitront au cours de la description qui va suivre, donnée uniquement à titre d'exemple non limitatif et faite en référence aux dessins annexés, sur lesquels :
- la figure 1 est une vue schématique générale de la mise en situation de l'invention selon un premier mode de réalisation;
- la figure 2 est une vue schématique générale de la mise en situation de l'invention selon un deuxième mode de réalisation ;
- la figure 3 est une vue schématique générale illustrant les différentes associations de codes enregistrées dans des zones mémoires ;
- la figure 4 est une vue schématique générale illustrant les différentes fonctionnalités d'une application logicielle téléchargeable sur un appareil de communication en vue d'exploiter les codes à lecture optique intégrés aux dispositifs d'identification divulgués ci-dessus ;
- la figure 5 illustre de façon schématique un exemple de dispositif antivol auquel l'invention peut s'appliquer ;
- la figure 6 illustre un autre exemple d'une partie de dispositif antivol auquel l'invention peut s'appliquer.

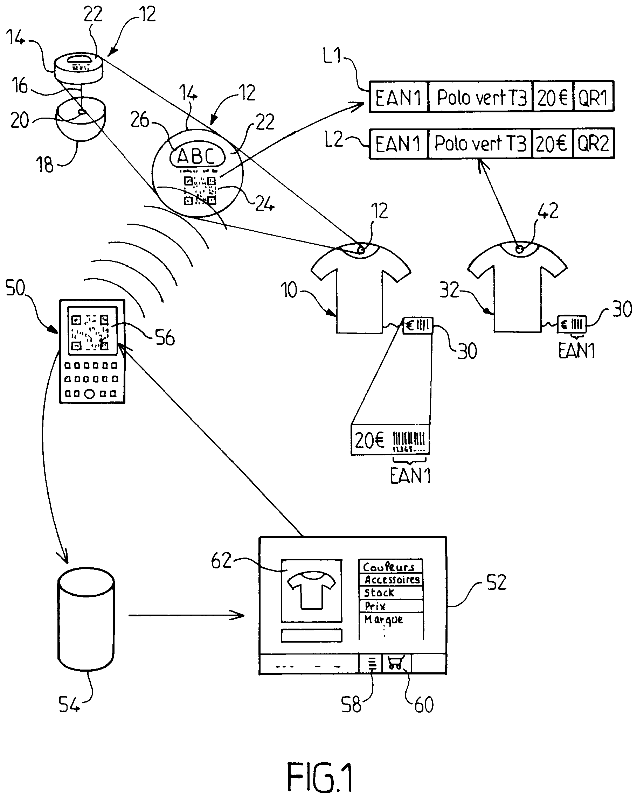

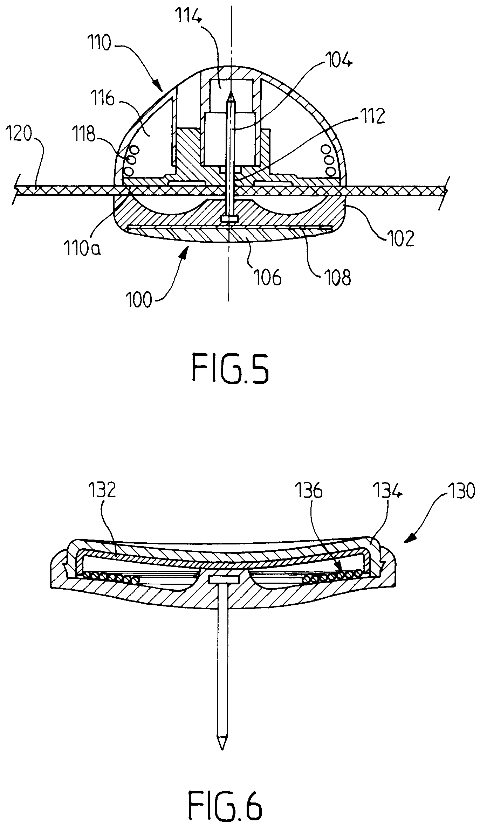

Comme représenté sur la figure 1, un article commercial qui est un objet physique 10 tel qu'un article en textile (ex :polo) porte un dispositif 12 verrouillé à ce dernier. Le dispositif 12 peut être un dispositif antivol ou non. Ce dispositif est par exemple celui représenté à l'une des figures 5 et 6 ou bien l'un de ceux décrits dans le brevet français N° 2 947 086 (pince de serrage). Chacun de ces dispositifs peut perdre sa fonction de protection contre le vol et ainsi constituer un simple dispositif d'identification d'un article commercial si l'on retire les moyens spécifiques assurant cette fonction et qui sont intégrés dans le dispositif. On notera que l'invention peut également s'appliquer à un dispositif antivol qui comporte un câble ou fil métallique verrouillé de façon permanente par une de ses extrémités au boitier du dispositif et dont l'extrémité opposée est verrouillable/déverrouillable de façon provisoire à ce même boitier après avoir par exemple passé le câble autour d'un objet à protéger (ex :anse de sac...).

Le dispositif d'identification 12 comprend deux parties, à savoir une tête 14 munie d'une pointe 16 qui s'étend en éloignement de la tête et qui est destinée à traverser l'objet physique 10 ou son emballage et un corps 18 pourvu d'un orifice 20 pour insérer la pointe à l'intérieur du corps. Le corps comprend, de façon connue, des moyens de verrouillage de la pointe qui a été insérée. La tête 14 du dispositif comporte une interface de protection transparente 22 (vitre, film plastique...) derrière laquelle sont disposés, de manière lisible depuis l'extérieur du dispositif, un ou plusieurs codes à lecture optique 24 et éventuellement des informations 26 qui sont portés par exemple par un même support (ex :disque imprimé en papier, plastique, carton...ou support faisant partie intégrante de la tête) encapsulé dans le dispositif.. Selon une variante, le code optique est sur l'interface de protection transparente elle même ou à l'intérieur de celle-ci (dans son épaisseur), voire à un autre endroit sur la tête 14 (en cas de nécessité la tête peut être modifiée ; par exemple la surface de l'interface de protection transparente peut être réduite et le code optique est porté par une zone de la tête située à côté de l'interface). Selon une autre variante, le ou les codes à lecture optique sont portés par le corps 18. Ce ou ces codes sont intégrés au dispositif lors de la fabrication de ce dernier. On notera que la présence de l'interface de protection transparente n'est pas indispensable et le code optique peut être aménagé à tout endroit visible de l'extérieur de la tête. De préférence, le code optique est inaccessible depuis l'extérieur du dispositif si l'on souhaite empêcher son éventuelle dégradation, sa modification ou suppression .Le code à lecture optique 24 est un code à deux dimensions et, par exemple, un code de type QR dit à réponse rapide (pour « Quick Response » en terminologie anglo-saxonne), également connu sous le nom de « flashcode».

Plusieurs versions de code QR peuvent être utilisées et notamment parmi celles-ci : version 1-21x21, 6 à 25 caractères alphanumériques ; version 2-25x25, 20 à 47 caractères alphanumériques ; version 3-29x29, 35 à 77 caractères alphanumériques; version 4-33x33, 67 à 114 caractères alphanumériques; version 10-57x57, 174 à 375 caractères alphanumériques; version 40-177x177, 1253 à 4296 caractères alphanumériques. A titre d'exemple, le code 24 possède une taille d'impression de 7,4mmx7,4mm et est un code QR Version 1 avec un taux de correction ou de redondance de 25%, pouvant représenter une chaîne de 8 caractères alphanumériques (de 0 à 9 et de A à Z). Un tel code est correctement lisible (par exemple à travers la glace d'une vitrine) par un utilisateur dont l'appareil de lecture est placé à environ une trentaine de centimètres du code. De plus, le code imprimé sur un support étant protégé par l'interface transparente 22, l'impression sera très peu dégradée dans le temps et un taux de redondance de 25% est donc suffisant. Le taux de correction étant très élevé, le confort de lecture du code est conservé même en cas de fortes dégradations de l'interface transparente ou du code optique lui-même s'il n'est pas protégé par une telle interface.

D'autres types de codes à lecture optique à deux dimensions peuvent être utilisés alternativement ou en plus d'un code QR. Parmi ces autres codes on trouve les codes de type Datamatrix en version carrée ou rectangulaire (avec une capacité de stockage maximum de 3116 caractères numériques, 2335 caractères alphanumériques ou de 1556 octets en binaire et un taux de correction (redondance) qui varie entre 3 et 10% en fonction du nombre de caractères à placer dans le code) et Aztec (avec une capacité de stockage minimum (module 15x15) de 13 caractères numériques et 12 caractères alphanumériques et une capacité de stockage maximum (module 151x151) de 3832 caractères numériques et 1914 caractères alphanumériques).

Le dispositif est fixé sur l'objet physique 10 par insertion de la pointe 16 à travers l'article en textile (vêtement ou autre article) et la pointe ayant traversé le matériau constitutif de l'article est ensuite introduite dans l'orifice d'insertion 20 du corps 18 pour être verrouillée à l'intérieur, verrouillant ainsi le dispositif à l'objet. Un utilisateur non muni d'un outil externe tel qu'un aimant puissant, un crochet... ne peut séparer le dispositif de l'objet. Le code à lecture optique 24 est emprisonné ou encapsulé derrière l'interface de protection 22, entre celle-ci et l'embase de la tête, et il n'est donc pas possible d'y accéder depuis l'extérieur. Un utilisateur non autorisé ne peut en effet pas retirer l'interface de protection qui est fixée à la tête de manière sécurisée. La tête peut être scellée de manière définitive (ex : collage, soudage...). Alternativement, la tête n'est pas scellée de manière définitive. Toutefois, lorsque le dispositif est installé en position verrouillée sur l'article, il n'est pas possible d'accéder à l'intérieur de la tête et donc de retirer l'interface de protection pour avoir accès au code optique.

Le code à lecture optique 24 identifie de façon unique le dispositif 12 dans lequel il est logé et, de ce fait, l'objet physique 10 auquel le dispositif est attaché de manière verrouillée.

Comme représenté à la figure 1 le code optique 24, également noté QR1, est associé/relié dans le système informatique du magasin (base de données) au code EAN1 (« European Article Number », généralement à 13 chiffres) qui est un code d'article commercial ou référence commerciale identifiant de façon univoque l'article commercial (ex : polo vert taille T3) mais pas l'objet physique lui-même. Les magasins disposent en effet de plusieurs exemplaires (qui correspondent chacun à un objet physique distinct) d'un même article commercial auxquels le même code d'article a été affecté. Le code QR1 est distinct du code EAN1 et tous deux sont mis en correspondance dans le tableau informatique (zone mémoire/base de données) illustré sur la figure 1 (ligne L1 du tableau).

Une étiquette 30 généralement cartonnée est attachée à l'objet physique 10. Cette étiquette porte le prix de l'article/objet physique et un code barre (code à lecture optique à une dimension) qui est représentatif du code EAN1 affecté à l'article. Un autre objet physique 32 correspondant au même article commercial (polo vert taille T3) porte la même étiquette 30 puisque le prix et le code barre sont identiques. Cet objet physique 32 porte un dispositif antivol 42 par exemple identique au dispositif 12 mais qui comporte un autre code à lecture optique QR2 unique différent du premier code 24 (QR1) et qui identifie de façon unique le dispositif 42 dans lequel il est encapsulé et, de ce fait, l'objet physique 32 auquel le dispositif est attaché de manière verrouillée. Le code QR2 est distinct du code EAN1 et tous deux sont associés dans le tableau (zone mémoire) illustré sur la figure 1 (ligne L2).

Ainsi, un code optique QR porté par un dispositif antivol ou non permet d'identifier de façon unique et sécurisée l'objet auquel le dispositif est fixé de manière verrouillée et, donc, de différencier l'un de l'autre deux objets, tels que 10 et 32, ayant le même code d'article commercial (ex : EAN1).

On notera qu'un tel code à lecture optique peut être réutilisé ultérieurement pour identifier d'autres objets une fois que le code optique aura été dissocié du code d'article commercial EAN (lien informatique rompu entre les deux codes). Le code QR1 affecté à l'objet 10 peut ainsi être affecté à un autre objet ayant un code d'article EAN différent (voire le même). Le code QR1 est alors associé dans le système informatique du magasin au code d'article EAN différent. Le dispositif portant le code QR1 est fixé à l'autre objet. Cette réaffectation du code optique peut être effectuée un nombre illimité de fois.

Le code à lecture optique (code intermédiaire servant d'interface client) est apte à être lu (et décodé) par un appareil de communication électronique par exemple portable (et donc mobile) qui peut être porté par un utilisateur, tel qu'un téléphone portable de type Smartphone. Alternativement, l'appareil peut être une webcam, une tablette tactile....

L'appareil est équipé d'une application de lecture (et décodage) du code optique (application par exemple préalablement téléchargée) et d'un navigateur Internet. En approchant l'appareil de communication 50 ainsi équipé du dispositif antivol 12, l'appareil peut donc lancer l'application de lecture, viser le code optique 24 avec la caméra et capturer l'image du code optique. Le code 24 a été conçu pour représenter de façon indirecte et modifiable, par exemple, l'adresse URL d'un site Internet ou d'une page web dédié à l'article commercial. Ce code incorpore une chaîne de caractères alphanumériques qui est décodable par l'application logicielle de lecture précitée afin de pointer sur une table ou un tableau d'association dynamique du type de ceux de la figure 1 et dans lequel se trouve l'adresse URL correspondant au code. Le décodage du code par l'application autorise de façon automatique et sécurisée (ex : via une connexion de type SSL) la connexion Internet avec le site ou la page 52 hébergée sur un serveur 54 et donc l'affichage du site ou de la page concernée sur l'écran 56 de l'appareil. L'utilisateur de l'appareil dispose d'informations sur l'article commercial en tant qu'article commercial (caractéristiques de l'article, tailles et couleurs disponibles, accessoires pouvant être utilisés avec l'article, prix, informations sur la marque sous laquelle l'article est proposé à la vente...) et également d'informations sur l'article en tant qu'objet physique puisque l'on peut connaître le nombre d'objets physiques en stock par sélection de la ou des icônes concernées. Selon une possibilité, le navigateur Internet de l'appareil 50 peut rediriger l'utilisateur, par l'intermédiaire d'une passerelle informatique vers un autre deuxième site ou une autre page web (par exemple un site marchand) qui propose à la vente l'objet/article recherché par l'utilisateur et qu'il n'a pu trouver sur le premier site 52 (ex : objet/article pas disponible en stock) ou bien un autre objet/article en relation avec l'objet équipé du dispositif qui a été lu par l'appareil dans le point de vente. Ensuite, l'acquisition de l'objet/article trouvé sur le deuxième site ou page web est effectuée par l'utilisateur auprès du point de vente soit directement par passage en caisse soit via son appareil 50 sur le premier site associé au point de vente. La livraison de l'objet/article est effectuée ultérieurement à l'utilisateur par l'entité commerciale associée au deuxième site web et le point de vente refacture ensuite l'entité associée au deuxième site web. Ainsi, le point de vente peut réduire ses stocks physiques d'objets/articles tout en proposant à la vente davantage de références commerciales d'objets/articles.

D'autres icônes 58, 60 permettent de déclencher d'autres actions comme par exemple sélectionner l'article visualisé sur la fenêtre 62 de la page Internet et le placer dans un panier virtuel ou une liste de sélection 58 dans lequel il sera mémorisé en vue d'une action différée : par exemple un achat en ligne sur Internet (site d'e-commerce) qui garantira au client, grâce à la capture de l'article par l'appareil à partir du code optique et à sa mémorisation dans cet appareil, que l'article qu'il recevra sera l'article qu'il aura préalablement choisi. Il est également possible de sélectionner l'article visualisé sur la fenêtre 62 et de le placer dans un panier d'achat 60 en vue de son acquisition immédiate en effectuant un paiement grâce à l'appareil 50. Il n'y a aucune possibilité de fraude par changement de l'étiquette 30 de l'objet puisque c'est le code optique lié de manière sécurisée à l'objet, via le dispositif d'identification verrouillé à ce dernier, qui fera le lien avec le véritable code EAN et donc avec le véritable prix. Dès reconnaissance/identification du dispositif et paiement de la transaction, le déverrouillage des deux parties du dispositif 12 avec l'outil de déverrouillage (ex : découpleur) situé en caisse a lieu, l'objet physique (article) est séparé du dispositif et le ticket de caisse est imprimé.

Sans la présence du code à lecture optique dans le dispositif verrouillé à l'objet physique, il ne peut être garanti aux clients qu'en cas d'achat dans le magasin via l'appareil 50 ou, lors d'un achat postérieur sur Internet, ils paieront le bon prix, recevront le bon article, à la bonne taille et à la bonne couleur.

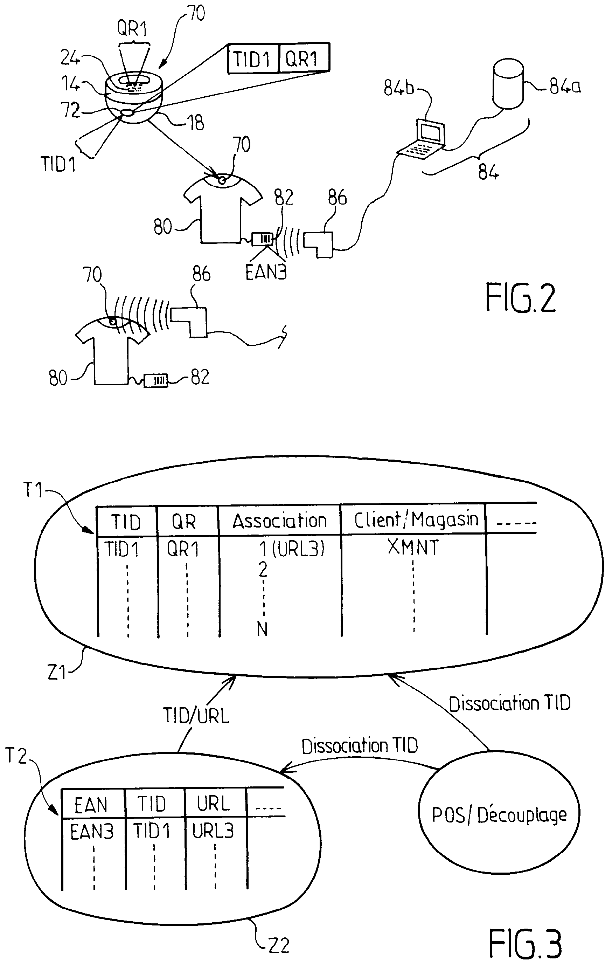

Selon un exemple (fig.2), un dispositif antivol ou non 70 (identique au dispositif 12) est équipé d'au moins un organe RFID 72 tel qu'un circuit doté d'une puce à mémoire et qui possède un identifiant TID (acronyme de « Transponder ID » en terminologie anglo-saxonne) unique et non modifiable. L'organe RFID 72 est logé à l'intérieur du dispositif comme représenté schématiquement sur la figure 2, par exemple dans le corps 18 (alternativement il peut être disposé dans la tête 14), et est donc inaccessible (visible ou non) de l'extérieur. Cette opération est effectuée lors de la fabrication du dispositif.

Comme énoncé ci-dessus, le code à lecture optique, incorpore une chaîne de caractères alphanumériques, par exemple de 8 caractères (ex : 013B48FC) avec un taux de redondance de 25%, qui est élaborée de façon indépendante de l'identifiant TID par souci de simplification.

Selon une variante, le code QR1 peut être partiellement ou totalement lié au code TID. En effet, dans cette variante le code optique QR1 est généré à partir du code TID1, en utilisant tout ou partie de ce code. Il est ainsi possible d'utiliser un code optique QR par exemple du type « 013B48FC » pour un code/identifiant TID dit utile (8 caractères/32 bits) avec 7% de redondance et un code optique QR par exemple du type « 013BF2000BFF48FC »pour un code/identifiant TID dit unique (16 caractères/64 bits) avec 7% de redondance, afin de faciliter la lecture avec la taille d'impression retenue.

Le code optique QR1 et l'identifiant TID1 sont associés entre eux et enregistrés dans une table d'association T1 stockée dans une première zone mémoire Z1 d'un système informatique comme illustré sur la figure 3. Ceci s'applique que le code optique QR soit indépendant du code/identifiant TID ou reprenne tout ou partie de ce dernier. Le dispositif 70 est mis en place sur un article commercial (objet physique) 80 et qui porte une étiquette 82 munie d'un code barre représentatif du code d'article commercial EAN (par exemple EAN3) mémorisé dans le système informatique 84 du magasin. Le système informatique 84 est par exemple différent du système dans lequel se trouve la zone d'enregistrement Z1.

Un appareil portatif 86, connu en soi (par exemple un appareil Motorola MC 3190), qui est capable de lire les codes barres des étiquettes des articles et de programmer les puces RFID des dispositifs est utilisé pour lire le code barre de l'étiquette 82. Cet appareil est connecté au système informatique 84 du magasin (base de données/serveur informatique 84a et ordinateurs 84b), ce qui permet, par la lecture du code barre, de récupérer le code d'article EAN3 qui, dans le système informatique représente l'article commercial (description, taille, marque, couleur, prix...).

L'appareil 86 est également utilisé pour lire l'identifiant ou code TID1 de l'objet physique 80 et, ainsi, l'associer au code d'article EAN3 et enregistrer cette association dans une table d'association T2 stockée dans une zone mémoire Z2 du système informatique du magasin comme illustré sur la figure 3. Dans cette table se trouvent également de nombreuses informations non représentées relatives à l'article commercial (description, taille, marque, couleur, prix...) et à son point de vente, ainsi qu'une ou plusieurs adresses URL, ici l'adresse URL3, dédiée à cet article. Ainsi, les codes et informations précités sont liés/associés dans la table T2.

Comme représenté sur la figure 3, l'association TID/URL, en l'occurrence TID1/URL3 pour l'objet/article 80, est transférée de façon sécurisée à la table T1 où elle est enregistrée dans un champ appelé « Association » et qui établit un lien entre les codes TID et QR et l'adresse URL correspondante. On notera que ce champ est créé au moment de la fabrication lorsque les codes TID et QR sont associés et enregistrés dans le tableau T1. Dans l'exemple représenté, c'est l'Association « 1 » qui associe les codes TID1, QR1 et URL3.

D'autres informations sont également enregistrées dans la table dynamique T1 comme par exemple le client/magasin où l'objet/article est offert à la transaction, des informations relatives aux différentes lectures des codes optiques des dispositifs fixés aux objets physiques et qui sont effectuées par des utilisateurs (consommateurs) différents telles que la date et les différentes actions exercées par l'utilisateur en relation avec le code optique concerné.

Selon une variante, l'appareil 86 est utilisé pour programmer ou encoder la puce RFID 72, c'est-à-dire que le code EAN3 est inscrit dans l'organe RFID où il est associé avec le code TID1.

Un appareil de communication mobile tel que l'appareil 50 de la figure 1 équipé d'un navigateur Internet et d'une application logicielle de lecture des codes optiques tels que le code optique QR mentionné ci-dessus est par exemple utilisé pour lire (décoder) le code optique QR1 du dispositif 70 verrouillé à l'article 80.

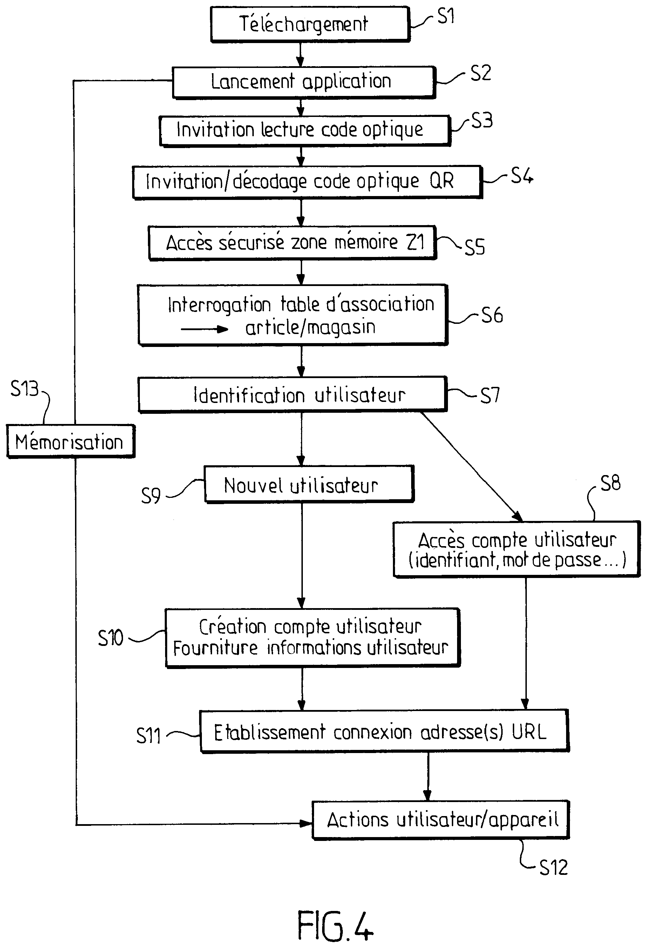

La figure 4 illustre les différentes fonctionnalités et étapes réalisées en relation avec cette application logicielle et notamment son exécution par l'appareil 50.

Au préalable l'application est téléchargée par l'appareil 50 via le réseau Internet (étape S1) et l'application est ensuite lancée (étape S2) par l'utilisateur. L'utilisateur qui est devant l'objet physique 80 est invité, dans la langue du système d'exploitation présent dans l'appareil (ou dans la langue choisie par l'utilisateur si plusieurs langues sont disponibles) à lire (décoder) le code optique QR1 (étape S3). En visant le code optique avec la caméra de son appareil, il numérise l'image du code et donc le décode (étape S4). L'application se connecte de façon sécurisée (ex : mode de connexion SSL) à la zone mémoire Z1 (étape S5) et interroge la table T1 à partir de la chaîne de caractères du code optique, ce qui permet d'identifier de manière unique l'article commercial concerné et le magasin où le code optique lié à l'article/objet de manière verrouillée a été lu (étape S6).

L'étape suivante S7 prévoit d'identifier l'utilisateur par exemple en lui demandant un nom d'utilisateur et un mot de passe.

Si l'utilisateur a déjà été enregistré dans le système informatique il a alors accès à son compte utilisateur (étape S8), sinon il est considéré comme un nouvel utilisateur (étape S9) et un compte utilisateur doit être créé par ce dernier en fournissant de manière sécurisée un certain nombre d'informations permettant de l'identifier telles que nom, prénom, adresse, téléphone, caractéristiques de carte de crédit aux fins de transaction commerciale ultérieure possible (étape S10).

L'étape suivante S11 prévoit ensuite d'établir une connexion Internet entre l'appareil 50 et une ou plusieurs adresses URL dédiées à l'article ou en relation avec celui-ci (articles complémentaires), à savoir ici l'adresse URL3. Cette liaison avec l'adresse URL correspondante est rendue possible en raison de la table d'association T1 et, plus particulièrement, de l'Association 1 qui lie l'identifiant TID1 le code QR1 et l'adresse URL3. L'utilisateur est ainsi dirigé automatiquement vers cette adresse où il peut accomplir différentes actions à partir de son appareil (étape S12) comme déjà décrit plus haut en relation avec le premier mode de réalisation (obtention d'informations sur l'article, achat, mémorisation de l'article dans l'appareil en vue d'une action ultérieure...).

Ainsi, le code optique porté par le dispositif d'identification de l'article incorpore une chaîne de caractères qui, après décodage, pointe sur une table d'association identifiant de manière unique et sécurisée l'article correspondant.

Ce n'est qu'après la réalisation d'étapes illustrées à la figure 4 et décrites ci-dessus que la connexion avec une adresse URL est établie, notamment après identification de l'utilisateur de l'appareil de lecture 50 du code optique 24. Ce code optique n'incorpore donc pas un script qui pointe directement vers une adresse URL.

On notera qu'une étape de mémorisation S13 est présente car toutes les actions de lecture de code(s) optique(s) par l'appareil 50 sont enregistrées en mémoire de l'appareil afin que l'utilisateur conserve un historique des différentes lectures de code aux fins de consultation ou d'achat ultérieurs.

De même, toutes les actions de lecture de code(s) optique(s) par l'appareil 50 ainsi que toutes les actions ultérieures de l'utilisateur (étape S12) sont enregistrées dans le système informatique où est stockée la table T1, voire dans celle-ci.

Comme illustré sur la figure 3, lorsque l'objet physique 80 est vendu à un utilisateur (encaissement par le magasin soit directement à une caisse soit par l'intermédiaire de l'appareil 50 et d'une connexion Internet sécurisée et retrait du dispositif verrouillé à l'objet par découplage) une dissociation doit être effectuée entre le code optique/identifiant TID et l'adresse URL/code EAN correspondant à l'objet/article (On notera que dans le mode de réalisation de la figure 1 on dissocie l'association code optique/adresse URL du site ou de la page dédié à l'article commercial). Cette dissociation est déclenchée à partir de la connaissance de la transaction sur l'objet physique et est enregistrée à la fois dans la table T1 et dans la table T2 (Fig.3) afin, d'une part, de rompre le lien entre les différents codes et adresses comme expliqué ci-dessus et, d'autre part, de conserver une trace de ces dissociations en tant que telles en vue d'une utilisation ultérieure telle que la facturation de services. Le dispositif 70 porteur du code QR1 et de l'identifiant TID1 est alors prêt à être utilisé pour identifier un autre objet physique en tant qu'article commercial comme décrit plus haut.

Les codes TID1 et QR1 permettent de lire et donc d'identifier, selon deux techniques de lecture différentes, de façon unique, certaine et sécurisée l'objet physique 80, indépendamment d'une mauvaise lecture du code barre, ou d'une lecture d'un code barre erroné par suite d'une substitution de l'étiquette 82 par erreur ou de façon malintentionnée. On limite ainsi fortement le manque à gagner résultant de la DI. Tous les autres avantages présentés ci-dessus en référence à la description de la figure 1 s'appliquent ici.

La chaîne de mise en place des différents éléments du système de d'identification/sécurisation d'articles commerciaux de la figure 1 est sensiblement la même que celle de la figure 2 qui vient d'être décrite ci-dessus moyennant quelques adaptations. Toutefois, le code EAN est uniquement associé au code optique QR qui constitue l'identifiant unique (permet d'associer des dizaines de millions de codes EAN) et, lorsque le dispositif est fixé à l'article (objet physique), le code optique est lu et associé au code EAN de l'article auquel le dispositif est fixé et donc à l'adresse URL d'un site ou de la page web dédié à l'article commercial.

Selon encore un autre exemple non représenté sur les figures, le dispositif antivol ou non de la figure 2 est modifié par remplacement du code à lecture optique 24 par une puce RFID (transpondeur ou radio-étiquette comprenant une puce électronique et un antenne), en plus de la première puce RFID 72. La deuxième puce RFID remplaçant le code optique n'est pas nécessairement protégée par une interface optiquement transparente mais peut être logée dans une partie non visible du dispositif 70 ou d'un dispositif d'un autre type (ex : en une seule pièce).

Dans cet exemple la première puce RFID 72 est utilisée par le personnel du magasin, par exemple pour la gestion des articles. Elle fonctionne suivant une première gamme de fréquences (ex : 860 à 960 MHz, norme EPC1 GEN 2) pour une lecture à longue portée (supérieure à 30 cm).

La deuxième puce RFID est utilisée par les consommateurs/clients du magasin, par exemple comme expliqué ci-dessus avec le code optique. Elle fonctionne avec une deuxième gamme de fréquences (ex : environ 13,56 MHz ou norme NFC pour « Near Field Contact ») pour une lecture à courte portée (ex : moins de 10 cm, voire par contact). Des appareils de communication électroniques tels que des téléphones portables de type Smartphone, par exemple les modèles « BlackBerry Bold 9790 » ou « Acer E320 Liquid Express », sont utilisables pour communiquer avec cette interface de communication client (deuxième puce RFID).On notera que les identifiants TIDi et TIDj des deux puces sont uniques , distincts du code d'article commercial (EAN, EPC...) de l'objet physique auquel le dispositif est fixé et offrent les mêmes avantages d'identification univoque de l'objet physique qu'avec le code à lecture optique. La gestion/liaison des codes TIDi, TIDj, EAN, adresse URL... peut être effectuée de façon similaire à ce qui a été exposé ci-dessus en référence à la figure 2.

Selon un exemple supplémentaire non représenté sur les figures, le dispositif antivol ou non de la figure 2 est modifié en utilisant à la place du code à lecture optique 24 et de la puce RFID 72 une seule puce RFID.

Cette puce unique combine les caractéristiques des deux puces RFID du mode de réalisation précédent en fonctionnant à la fois suivant une première gamme de fréquences (pour une lecture à longue portée) et suivant une deuxième gamme de fréquences (pour une lecture à courte portée).

Cette puce unique peut donc être lue par deux types d'appareil comme pour le mode précédent.

La puce possède dans une zone mémoire un identifiant unique TID qui, comme expliqué ci-dessus avec le mode précédent, est associé (dans un système informatique) à un code d'article commercial (EAN, EPC....) et à une adresse URL en relation directe ou indirecte avec l'article commercial. La gestion/liaison des codes TID, EAN, adresse URL... peut être effectuée de façon similaire à ce qui a été exposé ci-dessus en référence à la figure 2.

On notera que le code d'identification unique TID peut comporter une partie de code qui est utilisée par un lecteur RFID longue portée et une autre partie de code qui est utilisée par un lecteur RFID courte portée. Un lecteur RFID courte portée est un appareil de communication électronique tel qu'un téléphone portable de type Smartphone comme mentionné ci-dessus (par exemple, un modèle « BlackBerry Bold 9790 » ou « Acer E320 Liquid Express »). Le code est par exemple lu en entier par chaque appareil. Toutefois, des moyens logiciels sont prévus (dans les appareils) pour extraire, à partir des informations lues, uniquement la partie des informations concernée par l'appareil (informations pour le personnel du magasin ou informations représentatives, de façon indirecte, d'une adresse URL ou d'un site web en relation avec l'article commercial).

Un exemple de puce RFID combinée disponible dans le commerce est par exemple commercialisé par la société LUX-IDent. Une telle puce prend la forme d'une feuille prélaminée combinant une technique de communication LF ou HF et une technique de communication UHF (deux antennes sur un même substrat).

La figure 5 représente un dispositif antivol 100 comportant une tête 102 pourvue d'une pointe 104 et d'une interface de protection transparente 106 (ex :capot) par exemple soudée ou collée à la tête 102. Un support d'impression 108 portant notamment un code à lecture optique tel que le code 24 de la figure 1 est interposé entre l'interface 106 et la tête 102.

Le dispositif comprend également un corps 110 qui comporte un orifice 112 d'insertion de la pointe 104. Le corps a par exemple une forme générale sensiblement hémisphérique et présente une face sensiblement plane 110a agencée dans le plan équatorial, l'orifice 112 étant aménagé dans cette face.

Le corps 110 renferme une cavité 114 dans laquelle sont disposés des moyens de verrouillage à billes (mécanisme de verrouillage) non représentés. Plusieurs billes sont placées dans un entonnoir à l'intérieur de la cavité 114, dans un même plan et ménagent entre elles un espace central pour recevoir la pointe 104. Lorsque la pointe est insérée dans l'orifice et dans l'espace inter-billes, les billes se calent dans la partie convergente de l'entonnoir. Toute tentative de retrait axial de la pointe tend à enfoncer davantage les billes dans la partie convergente de l'entonnoir et donc à bloquer la pointe (position verrouillée des deux parties du dispositif emprisonnant entre elles un article commercial 120). On notera que les billes sont réalisées dans un matériau magnétique, ce qui permet ainsi de les extraire de la partie convergente de l'entonnoir sous l'action d'un champ magnétique externe.

Le corps 110 comporte également en périphérie de la cavité centrale 114 une chambre annulaire 116 dans laquelle est agencé un organe 118, voire plusieurs organes, par exemple passif, c'est-à-dire qu'il est apte à recevoir des ondes électromagnétiques provenant d'une source extérieure au dispositif. Un tel organe peut par exemple prendre la forme d'un circuit résonant de type LC.

Alternativement, le corps peut renfermer un ou plusieurs organes actifs, c'est-à-dire qui sont susceptibles d'émettre des ondes électromagnétiques vers l'extérieur du dispositif et d'en recevoir. De tels organes actifs ou passifs sont par exemple des bobines avec ferrite, avec ou sans condensateur, des circuits LCR, des filaments magnétiques, des circuits de type RFID dotés d'une puce à mémoire active ou passive, des micro-capteurs électroniques...Ce ou ces organes coopèrent, via la transmission d'ondes électromagnétiques, avec un système de détection, tel qu'un portique ou une antenne, placé à un point d'accès du magasin où est mis en vente l'article à protéger, afin de déclencher une alarme en cas de détection du dispositif au niveau du point d'accès.

La figure 6 illustre une variante de réalisation d'un dispositif antivol dont seule la tête 130 a été représentée. La tête comprend un support 132 de code à lecture optique sur lequel le code a par exemple été préalablement imprimé (ex : code 24 de la fig.1). Ce support est disposé entre l'interface de protection transparente 134 et l'embase de la tête et un organe actif ou passif 136 installé dans le logement existant entre l'embase de la tête et le support. L'organe 136 est apte à émettre et/ou recevoir des ondes électromagnétiques d'une source extérieure. L'organe passif prend par exemple la forme d'un circuit résonant de type LC dont une pluralité de conducteurs électriques ont été représentés. Un organe actif nécessite des moyens d'alimentation électrique.

## Revendications

1. Procédé de sécurisation d'un article commercial qui envisage la réutilisation d'un dispositif de protection contre le vol fixé audit article commercial qui est un objet physique (10,32 ; 80) emballé ou non, le dispositif (12,42 ; 70) comportant :
- au moins un organe actif ou passif qui est apte à émettre vers l'extérieur du dispositif ou à recevoir de l'extérieur des ondes électromagnétiques,
et qui est destiné à assurer en partie une fonction antivol en coopération avec un système complémentaire de protection contre le vol,
- au moins un transpondeur (72) qui possède un identifiant unique et non modifiable (TID),
- des moyens de fixation et de verrouillage du dispositif à l'objet physique ou à son emballage dans une position verrouillée telle qu'un utilisateur ne peut séparer le dispositif de l'objet physique sans un outil externe, lesdits moyens de verrouillage comprenant un mécanisme de verrouillage,
- au moins un identifiant unique qui est un code à lecture optique (QR1) distinct d'un code d'article commercial (EAN, EPC...) affecté à l'objet physique, en tant qu'article commercial, ledit au moins un code à lecture optique étant protégé de l'extérieur par une interface de protection transparente (22), ledit au moins un code à lecture optique étant adapté pour représenter une adresse URL d'un site ou d'une page web,
le procédé comprenant :
- l'association dudit au moins un code à lecture optique du dispositif à l'identifiant TID, au code d'article commercial (EAN, EPC...) et à une adresse URL affectés à l'objet physique auquel le dispositif est destiné à être fixé, ledit au moins un code à lecture optique identifiant de manière unique l'objet physique auquel le dispositif est destiné à être fixé,
- la dissociation dudit au moins un code à lecture optique et de l'identifiant TID porté par le dispositif du code d'article commercial (EAN, EPC..) ladite adresse URL affectés à l'objet physique auquel le dispositif a été fixé et verrouillé lorsqu'une transaction commerciale a été effectuée sur ledit objet physique et que ledit dispositif est séparé de ce dernier.

2. Procédé selon la revendication 1, **caractérisé en ce que** ledit au moins un code à lecture optique (24) n'est pas accessible depuis l'extérieur du dispositif.

3. Procédé selon la revendication 1 ou 2, **caractérisé en ce que** ledit au moins un code à lecture optique (24) est apte à être lu par un appareil de communication électronique (50) tel qu'un smartphone.

4. Procédé selon l'une des revendications 1 à 3, **caractérisé en ce que** ledit au moins un code à lecture optique (24) incorpore une chaîne de caractères alphanumériques qui est décodable par une application logicielle exécutable sur un appareil de communication électronique (50) tel qu'un smartphone, de façon à permettre ainsi d'identifier de manière unique et sécurisée l'article commercial.

5. Procédé selon l'une des revendications 1 à 4, **caractérisé en ce que** le décodage permet d'accéder à une zone mémoire sécurisée d'un système informatique dans laquelle est enregistrée une table d'association qui établit une association entre ledit au moins un code à lecture optique et l'article commercial/code d'article commercial (EAN..) et notamment le point de vente de l'article commercial.

6. Procédé selon la revendication 4 ou 5, **caractérisé en ce que** le décodage permet d'établir une connexion sécurisée vers une adresse URL d'un site ou d'une page web dédié à l'article commercial par l'intermédiaire d'une table d'association établissant une association entre ledit au moins un code à lecture optique, ladite adresse URL et éventuellement le code d'article commercial (EAN..).

7. Procédé selon l'une des revendications 1 à 6, **caractérisé en ce que** ledit au moins un code à lecture optique (24) est un code à deux dimensions, notamment un code QR ou un code de type Datamatrix.

8. Procédé selon l'une des revendications 1 à 7, **caractérisé en ce que** ledit au moins un code à lecture optique (24) est apte à pouvoir identifier de manière unique une pluralité d'autres objets physiques à chacun desquels le dispositif est destiné à être successivement fixé.

9. Procédé selon l'une des revendications 1 à 8, **caractérisé en ce qu'**il comprend deux parties, à savoir une tête (14) munie d'une pointe (16) destinée à traverser l'objet physique ou son emballage et un corps (18) pourvu d'un orifice pour l'insertion (20) de la pointe et de moyens de verrouillage de ladite pointe dans le corps, ledit au moins un code à lecture optique (24) étant porté par la tête et/ou le corps.

10. Procédé selon la revendication 1, **caractérisé en ce que** le procédé comprend l'enregistrement de chaque association dans une zone mémoire d'un système informatique.

11. Procédé selon la revendication 1, **caractérisé en ce que** le procédé comprend l'enregistrement, dans une zone mémoire d'un système informatique, d'une part de chaque lecture dudit au moins un code à lecture optique du dispositif par un appareil de communication mobile tel qu'un Smartphone et , d'autre part, de chaque action ultérieure exercée par un utilisateur par l'intermédiaire dudit appareil à partir des informations auxquelles l'utilisateur a pu avoir accès après la lecture dudit au moins un code à lecture optique.

## Patentansprüche

1. Verfahren zur Sicherung eines Handelsartikels, bei dem die Wiederverwendung einer am Handelsartikel befestigten Diebstahlschutzvorrichtung vorgesehen ist, bei der es sich um einen physischen Gegenstand (10, 32, 80) handelt, der verpackt oder nicht verpackt ist, wobei die Vorrichtung (12, 42, 70) umfasst:
- mindestens ein aktives oder passives Element, das zur Emittierung elektromagnetischer Wellen nach außerhalb der Vorrichtung oder zum Empfang elektromagnetischer Wellen von außerhalb der Vorrichtung geeignet ist,
und mit dem zum Teil eine Diebstahlschutzfunktion in Zusammenwirkung mit einem ergänzenden Diebstahlschutzvorrichtung gewährleistet werden soll,
- mindestens einen Transponder (72), der eine einzigartige, nicht veränderbare Kennung (TID) aufweist,
- Mittel zur Befestigung und Verriegelung der Vorrichtung am physischen Gegenstand oder dessen Verpackung in einer verriegelten Stellung, sodass ein Nutzer die Vorrichtung vom Gegenstand ohne externe Werkzeuge nicht trennen kann, wobei die Verriegelungsmittel einen Verriegelungsmechanismus umfassen,
- mindestens eine eindeutige Kennung, bei dem es sich um einen optisch lesbaren Code (QR1) handelt, der sich von einem auf dem physischen Gegenstand befestigten Code des Handelsartikels (EAN, EPC, usw.) an sich unterscheidet, wobei der mindestens eine optisch lesbare Code durch eine transparente Schutzschnittstelle (22) vor Außeneinwirkung geschützt ist, wobei der mindestens eine optisch lesbare Code zur Darstellung einer URL einer Webseite geeignet ist,
wobei das Verfahren umfasst:
- Zuordnen des mindestens einen optisch lesbaren Codes der Vorrichtung zur Kennung TID, zum Code des Handelsartikels (EAN, EPC, usw.) und zu einer URL, die mit dem physischen Gegenstand verbunden sind, an dem die Vorrichtung zu befestigen ist, wobei der mindestens eine optisch lesbare Code den physischen Gegenstand, an dem die Vorrichtung befestigt werden soll, eindeutig kennzeichnet,
- Trennen des mindestens einen optisch lesbaren Codes und der Kennung TID an der Vorrichtung com Code des Handelsartikels (EAN, EPC, usw.) und der URL, die mit dem physischen Gegenstand verbunden sind, an dem die Vorrichtung befestigt und verriegelt war, wenn ein Handelsgeschäft über den physischen Gegenstand getätigt worden ist und die Vorrichtung von diesem getrennt worden ist.

2. Verfahren nach Anspruch 1, **dadurch gekennzeichnet, dass** der mindestens eine optisch lesbare Code (24) von der Außenseite der Vorrichtung her nicht zugänglich ist.

3. Verfahren nach Anspruch 1 oder 2, **dadurch gekennzeichnet, dass** der mindestens eine optisch lesbare Code (24) dazu geeignet ist, von einem elektronischen Kommunikationsgerät (50), z.B. Smartphone, abgelesen zu werden.

4. Verfahren nach einem der Ansprüche 1 - 3, **dadurch gekennzeichnet, dass** der mindestens eine optisch lesbare Code (24) eine Kette von alphanumerischen Zeichen umfasst, die von einer Software-Anwendung entschlüsselt werden kann, die auf einem elektronischen Kommunikationsgerät (50), z.B. Smartphone, ausführbar ist, um so den Handelsartikel sicher und eindeutig identifizieren zu können.

5. Verfahren nach einem der Ansprüche 1 - 4, **dadurch gekennzeichnet, dass** die Entschlüsselung den Zugriff auf einen gesicherten Speicherbereich eines Computersystems ermöglicht, in dem eine Zuordnungstabelle gespeichert ist, die eine Zuordnung zwischen dem mindestens einen optisch lesbaren Code und dem Handelsartikel/dem EAN-Code usw., und insbesondere der Verkaufsstelle des Handelsartikels, herstellt.

6. Verfahren nach Anspruch 4 oder 5, **dadurch gekennzeichnet, dass** die Entschlüsselung es ermöglicht, eine gesicherte Verbindung mit einer URL einer Webseite des Handelsartikels über eine Zuordnungstabelle herzustellen, die eine Verbindung zwischen dem mindestens einen optisch lesbaren Code, der URL und ggf. dem Code des Handelsartikels (EAN, usw.) herstellt.

7. Verfahren nach einem der Ansprüche 1 - 6, **dadurch gekennzeichnet, dass** der mindestens eine optisch lesbare Code (24) ein zweidimensionaler Code, insbesondere ein QR- oder Datamatrix-Code, ist.

8. Verfahren nach einem der Ansprüche 1 - 7, **dadurch gekennzeichnet, dass** der mindestens eine optisch lesbare Code (24) dazu geeignet ist, eine Mehrzahl anderer physischer Gegenstände eindeutig zu kennzeichnen, an denen die Vorrichtung sukzessiv zu befestigen ist.

9. Verfahren nach einem der Ansprüche 1 - 8, **dadurch gekennzeichnet, dass** es zwei Teile umfasst, und zwar einen Kopf (14) mit einer Spitze (16), die den physischen Gegenstand oder dessen Verpackung durchqueren soll, und einem Hauptteil (18) mit einer Öffnung zur Einführung (20) der Spitze sowie Mitteln zur Verriegelung der Spitze im Hauptteil, wobei der mindestens eine optisch lesbare Code (24) vom Kopf oder Hauptteil getragen wird.

10. Verfahren nach Anspruch 1, **dadurch gekennzeichnet, dass** das Verfahren das Eintragen jeder Zuordnung in einem Speicherbereich eines Computersystems umfasst.

11. Verfahren nach Anspruch 1, **dadurch gekennzeichnet dass** das Verfahren umfasst: Eintragen jedes Lesevorgangs des mindestens einen optisch lesbaren Codes der Vorrichtung durch ein mobiles Kommunikationsgerät, z.B. Smartphone, einerseits und andererseits jeder anderen Handlung eines Nutzers durch das Gerät aufgrund der Informationen, auf die der Nutzer nach dem Ablesen des mindestens einen optisch lesbaren Codes zugreifen konnte.

## Claims

1. A method for providing security for a commercial article that envisages reuse of an antitheft protection device fixed to said commercial article being a packaged or unpackaged physical object (10,32; 80), the device (12,42; 70) having:
- at least one active or passive component that is capable of transmitting electromagnetic waves to the outside of the device or of receiving electromagnetic waves from the outside, and that is intented to partly carry out an antitheft function in cooperation with an antitheft complementary system,
- at least one transponder (72) that has a unique and non modifiable identifier (TID),
- means for fixing and locking the device to the physical object or to the packaging thereof in a locked position so that a user cannot separate the device from the physical object without an external tool, said locking means comprising a locking mechanism,
- at least one unique identifier that is an optically readable code (QR1) distinct from a commercial article code (EAN, EPC, etc.) assigned to the physical object, as a commercial article, said at least one optically readable code being protected from the outside by a transparent protection interface (22), said at least one optically readable code (24) being adapted to represent a URL address for a site or for a web page.
the method comprising:
- the association of said at least one optically readable code of the device with the identifier TID, the commercial article code (EAN, EPC, etc.) and an URL address assigned to the physical object to which the device is intented to be fixed,
- the dissociation of said at least one optically readable code and the identifier TID borne by the device with the commercial article code (EAN, EPC, etc.) said URL address assigned to the physical object to which the device has been fixed and locked when a commercial transaction has been carried out on said physical object and said device has been separated from the latter.

2. The method as claimed in claim 1, **characterized in that** said at least one optically readable code (24) cannot be accessed from the outside of the device.

3. The method as claimed in claim 1 or 2, **characterized in that** said at least one optically readable code (24) is capable of being read by an electronic communication appliance (50) such as a smartphone.

4. The method as claimed in one of claims 1 to 3, **characterized in that** said at least one optically readable code (24) incorporates a string of alphanumeric characters that is decodable by a software application that can be executed on an electronic communication appliance (50) such as a smartphone, so as thus to allow unique and secure identification of the commercial article.

5. The method as claimed in any of claims 1 to 4, **characterized in that** the decoding allows access to a secure memory area of a computer system, which secure memory area has an association table recorded that sets up an association between said at least one optically readable code and the commercial article/commercial article code (EAN, etc.) and particularly the point of sale of the commercial article.

6. The method as claimed in claim 4 or 5, **characterized in that** the decoding allows setup of a secure connection to a URL address for a site or for a web page dedicated to the commercial article by means of an association table setting up an association between said at least one optically readable code, said URL address and possibly the commercial article code (EAN, etc.).

7. The method as claimed in one of claims 1 to 6, **characterized in that** said at least one optically readable code (24) is a two-dimensional code, notably a QR code or a code of data matrix type.

8. The method as claimed in one of claims 1 to 7, **characterized in that** said at least one optically readable code (24) is capable of uniquely identifying a plurality of other physical objects to each of which the device is intended to be successively fixed.

9. The method as claimed in one of claims 1 to 8, **characterized in that** it comprises two portions, namely a head (14) equipped with a point (16) that is intended to pass through the physical object or the packaging thereof and a body (18) provided with an orifice for the insertion (20) of the point and of locking means for said point in the body, said at least one optically readable code (24) being borne by the head and/or the body.

10. The method as claimed in claim 1, **characterized in that** it comprises recording each association in a memory area of a computer system.

11. The method as claimed in claim 1, **characterized in that** it comprises recording, in a memory area of a computer system, firstly, each reading of said at least one optically readable code of the device by an electronic mobile communication appliance such as a smartphone and, secondly, each subsequent action performed by a user by means of said appliance on the basis of the information that the user has been able to access following the reading of said at least one optically readable code.
